# EUROPÄISCHE PATENTANMELDUNG

(11) **EP 3 333 002 A1**
(43) Veröffentlichungstag der Anmeldung: **13.06.2018**
(21) Anmeldenummer: 17020536.3
(22) Anmeldetag: 15.11.2017
(51) Int. Cl.: B60K 25/02, F16H 47/04, F16H 37/10

(54) **ZWEISTUFIGES PLANETENGETRIEBE FÜR EINE MOBILE ARBEITSMASCHINE**

(30) Priorität: 07.12.2016 DE 102016014508
(71) Anmelder: Kalinowski-Krumm, Ursula, 57482 Wenden (DE); Schulte, Christiane, 58710 Menden (DE)
(72) Erfinder: Kalinowski-Krumm, Ursula, 57482 Wenden (DE); Schulte, Christiane, 58710 Menden (DE)

(57) **Zusammenfassung**

Verfahren zum Fahrantrieb und Antrieb der verfahrenstechnischen Nebenaggregate einer mobilen Arbeitsmaschine mit einem fahrzeugseitigen Antriebsmotor, umfassend ein zweistufiges Planetengetriebe (10) mit zwei getrennten, verbindbaren Achswelle (3,6); wobei eine erste Achswelle (3) mit dem Fahrantriebsmotor und eine zweite Achswelle (6) mit einer Kardanwelle verbunden ist, sowie einem Zahnrad (8), das an die Außenverzahnung eines ersten Hohlrads (4) angeschlossen ist, und einem Zahnrad (9), das an die Außenverzahnung eines zweiten Hohlrads (31) angeschlossen ist, sowie mit einem Planetenträger (5), der auf jeder Seite Planetenräder (21, 33) trägt, wobei die Planetenräder (21) der ersten Seite Bestandteil der ersten Getriebestufe und die Planetenräder (33) der zweiten Seite Bestandteil der zweiten Getriebestufe sind.

## Beschreibung

Die Erfindung betrifft ein zweistufiges Planetengetriebe mit einem Planetenträger mit beidseitig angeordneten Planetenrädern, zwei Hohlrädern und zwei Sonnenrädern für eine Arbeitsmaschine wie sie bspw. zur Beseitigung von Öl und anderen extremen Verschmutzungen von Verkehrsflächen oder ausgeführt als Kehrmaschine bekannt ist. Kennzeichnend für solche Arbeitsmaschinen ist es, dass die eigentliche Reinigungsvorrichtung und die zugehörige Verfahrenstechnik (Nebenaggregate) an und/oder auf einem Trägerfahrzeug, das aus Kostengründen schnell zum Einsatzort gelangen soll (Fahrmodus), montiert sind, bspw. in DE 10 2010 027 314. Deshalb verfügen diese Fahrzeuge über einen handelsüblichen Verbrennungsmotor als Antriebsaggregat, dabei erfolgt die Kraftübertragung in bekannter Weise über eine Kupplung, ein fahrzeugseitiges Getriebe und eine Kardanwelle auf die Achsen des Fahrzeugs; dieser Antriebsstrang garantiert relativ hohe Fahrgeschwindigkeiten. Während des Einsatzes der Reinigungsmaschine ist dieser Antriebsstrang allerdings wenig geeignet, da die Reinigungsvorrichtung am Fahrzeug eine sehr geringe und konstante Geschwindigkeit erfordert (Arbeitsmodus). Deshalb verfügen solche Fahrzeuge über einen so genannten hydraulischen Hydrostat-Antrieb wie er bspw. aus DE 3941024 bekannt ist.

Neuere Überlegungen zielen darauf ab, die Kardanwelle in zwei Antriebsteilwellen zu trennen, die dann über ein Leistungsverzweigungsgetriebe verbunden sind. Im Fahrmodus werden diese beiden Antriebsteilwellen im Getriebe starr verbunden und die Nebenaggregate werden nicht angetrieben. Im Arbeitsmodus sind die beiden Antriebsteilwellen getrennt und die gesamte Motorleistung wird über die erste Antriebsteilwellen bspw. zum Antrieb eines Generators oder einer Hydraulikpumpe genutzt. Mittels Elektromotoren oder Hydraulikmotoren werden dann alle Nebenaggregate des Fahrzeugs und die zweite Antriebsteilwelle zum Fahrzeugantrieb angetrieben.

In DE 10 2014 001 020 ist ein solcher Antriebsstrang beschrieben; hier werden in den Antriebsstrang (Kardanwelle) eines Trägerfahrzeugs mit den aufgebauten verfahrenstechnischen Komponenten für die Umsetzung der Arbeitsfunktionen drei Kupplungen, bspw. Elektromagnetkupplungen oder pneumatisch betätigte Kupplungen, eingebaut, dabei sind abtriebsseitig nach dem Fahrzeuggetriebe zunächst eine Abtriebskupplung als Schließkupplung, dann eine Trennkupplung und abschließend eine Antriebskupplung als Schließkupplung realisiert. Eine solche Anordnung der Kupplungen kann aber auch mit einem Hydrauliksystem realisiert werden, wobei ein hydraulischer Verbraucher dann ein Stromgenerator sein kann, der die elektrische Versorgung verfahrenstechnischer Komponenten garantiert. Der Kraftfluss erfolgt somit bei geöffneter Trennkupplung (Arbeitsmodus) im Bypass von der ersten Antriebsteilwelle und der Abtriebskupplung über den Nebenabtrieb an die Antriebskupplung und die zweite Antriebsteilwelle sowie an den Antrieb der Nebenaggregate. Bei geschlossener Trennkupplung (Fahrmodus) erfolgt der Kraftfluss direkt von der ersten Antriebsteilwelle an die zweite Antriebsteilwelle, so dass quasi der vollständige Kardanwellenstrang wiederhergestellt ist.
Eine weitere Ausgestaltung dieser technischen Lösung ist in EP 15700699.0 angegeben. Hier wird unter anderem vorgeschlagen, den Kraftfluss über den Nebenabtrieb mittels eines Ausgleichgetriebes an die Antriebskupplung zu übertragen, wobei durch ein Friktionselement derart auf das Ausgleichsgetriebe, das als einfaches Differential ausgebildet sein kann, eingewirkt werden kann, dass sich zwischen erster Achswelle und der zweiten Achswelle eine unterschiedliche Drehzahl einstellt. Dieses gelingt, wenn die erste Achswelle eines solchen Ausgleichgetriebes von der Abtriebskupplung bzw. dem Nebenabtrieb angetrieben wird und die zweite Achswelle ihr Drehmoment an die Antriebskupplung überträgt. Die Friktionskraft ist dabei einstellbar. Je höher sie ist, desto geringer ist die Drehgeschwindigkeit der zweiten, an die Antriebskupplung angeschlossenen Achswelle eines solchen Ausgleichsgetriebes gegenüber der Drehgeschwindigkeit der ersten Achswelle. Über denselben Nebenabtrieb werden die anderen Verbraucher der Arbeitsmaschine mit Antriebsleistung versorgt.

Eine weitere Konkretisierung der technischen Lösung, wie sie in EP 15700699.0 vorgeschlagen ist, wird in DE 10 2016 010 372.8 ausgeführt. Hier werden alle zum Betrieb der Arbeitsmaschine erforderlichen Antriebe über das Fahrzeuggetriebe und ein weiteres Planetengetriebe mit drei Kupplungen gemäß DE 10 2014 001 020 realisiert.

Ferner ist in DE 36 19 640 ein Antriebssystem für ein Nutzfahrzeug mit über eine Arbeitshydraulik betätigbaren Nutzeinrichtungen offenbart. Das Antriebssystem basiert auf einem zweistufigen Planetengetriebe mit zwei getrennten, verbindbaren Achswellen. Dieses zweistufige Planetengetriebe, gebildet durch ein vierwelliges hydromechanisches Leistungsverzweigungsgetriebe, hat einen Planetenträger mit einseitig angeordneten Planetenrädern und weist ein Hohlrad aus.

Die meisten bisherigen technischen Lösungen fußen darauf, dass neben dem vorhandenen Fahrzeuggetriebe ein weiteres Getriebe zur Leistungsverzweigung vorgesehen wird. Hierdurch treten ein höheres Fahrzeuggewicht und entsprechend höhere Herstellkosten der gesamten Arbeitsmaschine auf. Deshalb liegt dieser Erfindung die Aufgabe zugrunde, die Funktionen des Fahrzeuggetriebes und des Leistungsverzweigungsgetriebes in einem neuen, zweistufigen Planetengetriebe mit einem Planetenträger mit beidseitige angeordneten Planetenrädern sowie mit jeweils zwei Hohl- und Sonnenrädern zu realisieren. Die Aufgabe wird gelöst durch ein Verfahren nach Patentanspruch 1 sowie durch eine Vorrichtung nach Patentanspruch 6. Weiterbildungen des Verfahrens sind Gegenstand der Unteransprüche.

Dieses zweistufige Planetengetriebe wird unmittelbar an den Fahrzeugmotor angeschlossen. Über einen Planetenträger, der auf beiden Seiten unterschiedlich übersetzte Planetenräder trägt, werden zwei ebenfalls außenverzahnte Hohlräder angetrieben, wobei die Planetenräder auf jeder Seite des Planetenträgers über jeweils ein Sonnenrad mit jeweils einer Achswelle verbunden sind; die beiden Achswelle sind getrennt. Ein Hohlrad ist über die Außenverzahnung mit einer Hydraulikpumpe verbunden. Das andere Hohlrad ist über die Außenverzahnung mit einem Steuermotor verbunden, der als Motor und Pumpe betrieben werden kann. Hydraulikpumpe und Steuermotor sind in ein außerhalb des Getriebes angeordneten Hydrauliksystem derart eingebunden, dass durch entsprechende Ventilstellungen alle zum Betrieb der Arbeitsmaschine erforderlichen Arbeitsmodi einstellbar sind.

Nachfolgend ist die Erfindung anhand eines Ausführungsbeispiels unter Bezugnahme auf die beigefügten Figuren beschrieben. Es zeigen:
**Fig. 1****:** 3D-Darstellung des zweistufigen Planetengetriebes
**Fig. 2****:** Verfahrensfließbild zur Betrieb des zweistufigen Planetengetriebes

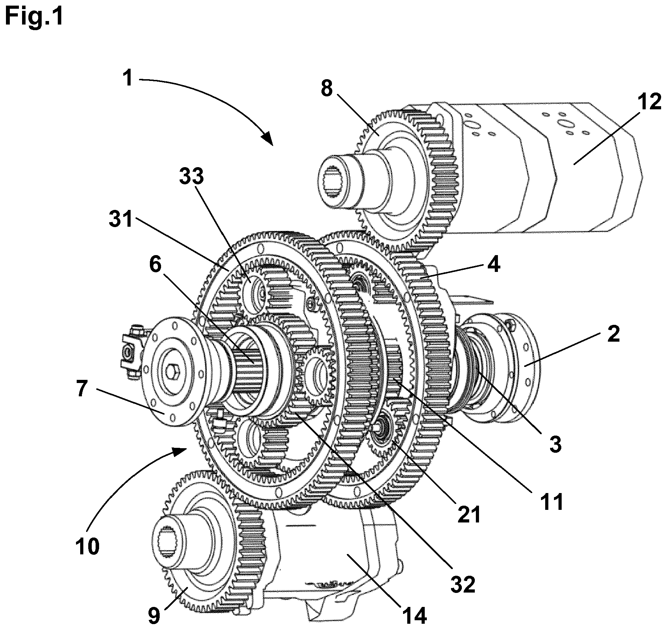

Eine im Übrigen nicht näher dargestellte mobile Arbeitsmaschine umfasst bei dem dargestellten Ausführungsbeispiel in Fig.1 das Antriebssystem (1), bestehend aus einem zweistufigen Planetengetriebe (10) mit dem Planetenträger (5), der auf einer zur ersten Getriebestufe gerichteten Seite (Fahrzeugmotorseite) die Planetenräder (21) der ersten Getriebestufe und auf der anderen, zur zweiten Getriebestufe gerichteten Seite (Kardanwellenseite) die Planetenräder (33) der zweiten Getriebestufe trägt. Innerhalb der ersten Getriebestufe ist das erste Sonnenrad (11), das fest mit der ersten Achswelle (3) verbunden ist, mit den Planetenrädern (21) im Eingriff. Die erste Achswelle (3) ist über den Antriebsflansch (2) an den nicht dargestellten Fahrzeugmotor angeschlossen. Die Planetenräder (21) greifen in die Innverzahnung des ersten Hohlrads (4), das seinerseits über die Außenverzahnung, die Eingriff mit dem Zahnrad (8) ist, die Hydraulikpumpe (12) antreibt.

Innerhalb der zweiten Getriebestufe ist das zweite Sonnenrad (32), das fest mit der zweiten Achswelle (6) verbunden ist, mit den Planetenrädern (33) im Eingriff. Die zweite Achswelle (6) ist über den Antriebsflansch (7) an die nicht dargestellte Kardanwelle angeschlossen. Die Planetenräder (33) greifen in die Innverzahnung des zweiten Hohlrads (31), das seinerseits über die Außenverzahnung, die Eingriff mit dem Zahnrad (9) ist, den Steuermotor (14) antreibt oder über den Steuermotor (14) abgebremst wird.

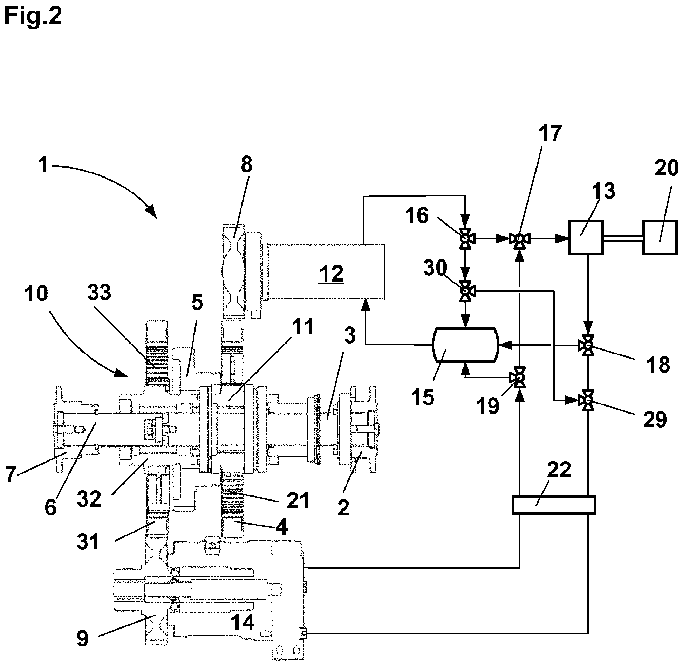

In Fig.2 ist die verfahrenstechnische Umsetzung der Leistungszufuhr für Fahrantrieb oder Fahrantrieb mit Antrieb der Nebenaggregate dargestellt. Das Zahnrad (8) treibt eine Hydraulikölpumpe (12) an oder die Hydraulikölpumpe (12) blockiert über das Zahnrad (8) das Hohlrad (4). Hydrauliköl gelangt über das Steuer- und Regelungsbauteil, ausgeführt bspw. als Proportionalventil (16), anteilig über das Mischventil (17) zu einem Hydraulikölmotor (13), der seinerseits die Nebenaggregate (20) antreibt. Von diesem Hydraulikölmotor (13) gelangt das Hydrauliköl über das Drei-Wege-Ventil (18) zum Hydrauliköltank (15) oder über das Ventil (29) und das Umschaltventil (22) zum Steuermotor (14), der seinerseits fest mit dem Zahnrad (9) verbunden ist. Von dem Steuermotor (14), der als Pumpe wirkt, gelangt das Hydrauliköl über das Umschaltventil (22) und das Regelventil (19) zum Hydrauliköltank (15) oder zu dem Mischventil (17) vor dem Hydraulikölmotor (13) und kann hier zum zusätzlichen Antrieb des Hydraulikmotors (13) genutzt werden. Ist das Steuer- und Regelbauteil (16) geschlossen, also kein Antrieb der Nebenaggregate (20), so kann Hydrauliköl über das Ventil (30), das Ventil (29) und das Umschaltventil (22) zum Steuermotor (14) gelangen, der nun als Motor wirkend, über das Zahnrad (9), die Planetenräder (33) und das zweite Sonnenrad (32) die zweite Achswelle (6) zusätzlich antreibt. Als Alternative kann der Steuermotor (14) das zweite Hohlrad (31) blockieren. Über das Umschaltventil (22) kann die Drehrichtung des Steuermotors (14), und damit die Drehrichtung des Zahnrads (9) und des Sonnenrads (32) geändert werden.
Folgende Betriebsweisen der Arbeitsmaschine sind möglich:
**Fahrmodus:** langsame oder schnelle Fahrgeschwindigkeit ohne Antrieb der Nebenaggregate
   1. Motor läuft, Fahrzeug steht:
      Der Steuermotor (14) blockiert das zweite Hohlrad (31); das erste Hohlrad (4) läuft rechts herum lastfrei gegen die Hydraulikpumpe (12); das Proportionalventil (16) ist voll geöffnet; Hydrauliköl strömt in den Hydrauliköltank 15.
   2. Fahrzeug fährt mit kleinster Geschwindigkeit kleiner rd. 2 km/h:
      Der Steuermotor (14) blockiert das zweite Hohlrad (31); das Proportionalventil (16) wird langsam geschlossen; das Ventil (17) ist geschlossen; es baut sich ein Drehmoment am ersten Hohlrad (4) außen auf, das in gleicher Größe über die Planetenräder (21) und das erste Sonnenrad (11) sowie die Planetenräder (33) und das zweite Sonnenrad (32) an die zweite Achswelle (6) übertragen wird; die Fahrgeschwindigkeit wird mit der Motordrehzahl, und damit über die Drehzahl der ersten Achswelle (3) eingestellt; das erste Hohlrad (4) läuft rechts herum; erste Stufe des Planetengetriebes hat bspw. eine Übersetzung von rd. 1:3; die max. Motordrehzahl von bspw. rd. 3.000 min⁻¹ bei 20...25 km/h Fahrgeschwindigkeit wird auf bspw. rd. 1.000 min⁻¹ am ersten Hohlrad (4) reduziert.
   3. Fahrzeug fährt mit kleiner Geschwindigkeit größer rd 2 km/h und kleiner rd. 20...25 km/h:
      Der Steuermotor (14) blockiert das zweite Hohlrad (31); das Proportionalventil (16) ist vollständig geschlossen; das Hydrauliköl gelangt über das Ventil (30) in den Hydrauliköltank (15); das erste Hohlrad (4) wird von Hydraulikpumpe (12) blockiert; die Fahrgeschwindigkeit wird ausschließlich über die Veränderung der Motordrehzahl eingestellt, d.h es besteht ein rein mechanischer Durchtrieb, da beide Hohlräder blockiert sind
   4. Fahrzeug fährt mit hoher Geschwindigkeit größer rd. 20...25 km/h:
      Das Proportionalventil (16) ist voll geöffnet; das Ventil (17) geschlossen; über das Ventil (30), Ventil (29) und (22) wird der Steuermotor (14) im Linkslauf angetrieben, der seinerseits das zweite Hohlrad (31) rechtsläufig antreibt; der Planetenträger (5) trägt gegenüberliegend die Planentenräder der ersten (21) und zweiten (33) Getriebestufe; diese Planetenräder haben als Baugruppe auf dem Planetenträger die gleiche Drehzahl, die Drehzahl der einzelnen Planetenräder sind allerdings in der ersten Getriebestufe anders als in der zweiten Getriebestufe ausgelegt, so dass über das zweite Sonnenrad (32) die von der ersten Getriebestufe anstehende Drehzahl gemäß dem Übersetzungsverhältnis erhöht wird; das zweite Sonnenrad (32) läuft links herum und treibt die zweite Achswelle (6) zusätzlich zum Antrieb durch die erste Getriebestufe rechts herum an.
   5. Rückwärtsfahrt
      Das Proportionalventil (16) ist voll geöffnet; das Ventil (17) ist geschlossen; über das Ventil (30), Ventil (29) und (22) wird der Steuermotor (14) im Rechtslauf angetrieben, der seinerseits das zweite Hohlrad (31) linksläufig antreibt; das zweite Sonnenrad (32) läuft rechts herum, also gegenläufig zum linkslaufenden ersten Sonnenrad (11); dreht jetzt das zweite Hohlrad (31) bzw. das zweite Sonnenrad (32) schneller rechts herum als das erste Hohlrad (4) bzw. das erste Sonnenrad (11), so wird eine Fahrrichtungsumkehr bewirkt, dabei dreht das zweite Hohlrad (31) schneller als der Planetenträger (5), so dass resultierend durch die Überlagerung der Drehbewegungen das zweite Sonnenrad (32) rechts herum dreht.
**Arbeitsmodus** konstante, langsame Arbeitsgeschwindigkeit und Antrieb der Nebenaggregate
   6. Leistungsbedarf für Fahrantrieb und Antrieb der Nebenaggregate in etwa gleich groß:
      Der Steuermotor (14) blockiert das zweite Hohlrad (31); das vom Motor anstehende Drehmoment wird über das erste Hohlrad (4) anteilig an das Zahnrad (8) und über das erste Sonnenrad (11) und die Planetenräder (21) an den Planetenträger (5) übertragen, auf dem Planetenträger (5) sitzen ebenfalls die Planetenräder (33) der zweiten Getriebestufe, die jetzt über das zweite Sonnenrad (32) die Achswelle (6) antreiben, da das zweite Hohlrad (31) blockiert ist; das Proportionalventil (16) ist geöffnet, so dass das gesamte Hydrauliköl zum Hydraulikölmotor (13) gelangt, der die Nebenaggregate (20) antreibt; das Hydrauliköl gelangt dann über das Ventil (18) zum Hydrauliköltank (15); das Ventil (17) ist voll geöffnet. Dies bedeutet, dass ohne weitere Bremseinwirkung das an der Hydraulikölpumpe (12) durch den Antrieb der Nebenaggregate (20) entstehende Drehmoment in gleicher Größe an der Achswelle (6) zum Fahrantrieb zur Verfügung steht.
   7. Leistungsbedarf für Fahrantrieb größer als Antrieb der Nebenaggregate
      Wird nun bspw. durch eine steile Bergauffahrt der Arbeitsmaschine ein höheres Drehmoment am Planetenträger (5) benötigt, so wird die Fahrzeugmotordrehzahl weiter erhöht. Damit würde sich auch die Leistungszufuhr für den Nebenabtrieb über das Zahnrad 8 erhöhen. In diesem Fall wird das Proportionalventil (16) so weit geschlossen, dass nur noch so viel Hydrauliköl zum Hydraulikölmotor (13) gelangen kann, um die Leistungszufuhr zu den Nebenaggregaten (20) konstant zu halten. Das überschüssige Hydrauliköl gelangt über das Ventil (30) zum Hydrauliköltank (15) bzw. wird über das Ventil (30), Ventil (29) und das Ventil (22) zum hilfsweisen Fahrantrieb über den Steuermotor (14) und das Zahnrad (9) genutzt.
   8. Bremsenergierückgewinnung bei Bergabfahrt
      Das Proportionalventil (16) ist so weit geschlossen, dass nur noch so viel Hydrauliköl zum Hydraulikölmotor (13) gelangen kann, um die Leistungszufuhr zu den Nebenaggregaten (20) konstant zu halten; das Ventil (17) ist entsprechend geöffnet; lediglich der Steuermotor (14) wirkt als Pumpe und wird durch das Drehmoment durch den Hangabtrieb des Fahrzeugs über das zweite Hohlrad (31) dergestalt angetrieben, dass das vom Hydraulikölmotor (13) kommende Hydrauliköl im Druck erhöht über das Ventil (22), (19) und (17) wieder vor den Hydraulikölmotor (13) zurückgeführt wird; entsprechend wird das Ventil (16) weiter geschlossen, da jetzt eine zusätzliche Leistungseinspeisung vor dem Hydraulikmotor (13) erfolgt. Im Extremfall ist das Ventil (16) geschlossen und die Nebenaggregate (20) werden ausschließlich über die rückgewonnene Bremsenergie angetrieben.

Bezugszeichen:
- 1: Antriebssystem
- 2: Antriebsflansch zum Anschluss den Fahrzeugmotor
- 3: Erste Achswelle
- 4: Hohlrad 1 mit Innen- und Außenverzahnung
- 5: Planetenträger
- 6: Zweite Achswelle
- 7: Abtriebsflansch zum Anschluss der Kardanwelle
- 8: Zahnrad zum Antrieb der Nebenaggregate
- 9: Zahnrad zum Antreiben und Bremsen
- 10: Zweistufiges Planetengetriebe
- 11: Sonnenrad 1
- 12: Hydraulikpumpe
- 13: Hydraulikölmotor
- 14: Steuermotor, als Motor oder Pumpe wirkend, mit Wechselventil für Rechts-/Linkslauf
- 15: Hydrauliköltank
- 16: Steuer- und Regelbauteil: Proportionalventil
- 17: Mischventil
- 18: Drei-Wege-Ventil
- 19: Regelventil
- 20: Nebenaggregate
- 21: Planetenrad, Stufe 1
- 22: Umschaltventil
- 29: Drei-Wege-Ventil
- 30: Drei-Wege-Ventil
- 31: Hohlrad 2 mit Innen- und Außenverzahnung
- 32: Sonnenrad 2
- 33: Planetenrad, Stufe 2

## Patentansprüche

1. Verfahren zum Fahrantrieb und Antrieb der verfahrenstechnischen Nebenaggregate einer mobilen Arbeitsmaschine mit einem fahrzeugseitigen Antriebsmotor, umfassend ein zweistufiges Planetengetriebe (10) mit zwei getrennten, verbindbaren Achswelle (3,6); wobei eine erste Achswelle (3) mit dem Fahrantriebsmotor und eine zweite Achswelle (6) mit einer Kardanwelle verbunden ist, sowie einem Zahnrad (8), das an die Außenverzahnung eines ersten Hohlrads (4) angeschlossen ist, und einem Zahnrad (9), das an die Außenverzahnung eines zweiten Hohlrads (31) angeschlossen ist, sowie mit einem Planetenträger (5), der auf jeder Seite Planetenräder (21, 33) trägt, wobei die Planetenräder (21) der ersten Seite Bestandteil der ersten Getriebestufe und die Planetenräder (33) der zweiten Seite Bestandteil der zweiten Getriebestufe sind, **dadurch gekennzeichnet, dass**
- die Achswelle (3) über ein erstes Sonnenrad (11) und den Planetenrädern (21) der ersten Getriebestufe mit dem ersten Hohlrad (4) verbunden ist, und Nebenaggregate (20) der Arbeitsmaschine über das erste Hohlrad (4) und das Zahnrad (8) durch eine Hydraulikpumpe (12) und einen Hydraulikmotor (13) angetrieben werden, wobei die Leistungszufuhr zu den Nebenaggregaten (20) durch ein Steuer- und Regelungsbauteil (16) regelbar ist,
- das an der Hydraulikölpumpe (12) durch den Antrieb der Nebenaggregate (20) entstehende Drehmoment ein Drehmoment an der Achswelle (6) zum Fahrantrieb auftritt,
- der Fahrantrieb der Arbeitsmaschine über die zweite Achswelle (6), die über ein zweites Sonnenrad (32) und den Planetenrädern (33) der zweiten Getriebestufe mit einem zweiten Hohlrad (31) verbunden ist, erfolgt, wobei durch einen Steuermotor (14) über das Zahnrad (9) zusätzlich Antriebsenergie zur Fahrgeschwindigkeitserhöhung eingespeist oder Bremsenergie zum zusätzlichen oder alleinigen Antrieb der Nebenaggregate (20) entnommen werden kann,
- durch eine Verstellung der Fahrzeugmotordrehzahl die Leistungszufuhr zum Planetengetriebe (10) durch eine Veränderung von Drehzahl und Drehmoment der Achswelle (3) regelbar und
- durch den Steuermotor (14) über das Zahnrad (9) eine Drehrichtungsumkehr des zweiten Hohlrads (31) und damit des zweiten Sonnenrads (32) einstellbar ist, so dass durch eine Überlagerung der gegenläufigen Drehbewegungen der beiden Sonnenräder (11,32) eine Fahrtrichtungsumkehr einstellbar ist.

2. Verfahren nach Anspruch 1, wobei das Zahnrad (8) eine Hydraulikölpumpe (12) antreibt, **dadurch gekennzeichnet, dass** das Steuer- und Regelungsbauteil (16), ausgeführt als Proportionalventil, nur gerade die Menge an Hydrauliköl zu einem Hydraulikölmotor (13) durchlässt, um den jeweiligen Leistungsbedarf der Nebenaggregate (20) geregelt zu decken.

3. Verfahren nach den Ansprüchen 1 und 2, **dadurch gekennzeichnet, dass** das restliche vom Steuer- und Regelungsbauteil (16) abströmende Hydrauliköl über ein Drei-Wege-Ventil (30, 29), ein Umschaltventil (22) und den Steuermotor (14) und das Zahnrad (9) hilfsweise für den Fahrzeugantrieb zur Fahrgeschwindigkeitserhöhung genutzt wird.

4. Verfahren nach den Ansprüchen 1 und 2 zur Bremsenergierückgewinnung, wobei das Zahnrad (9) den als Pumpe wirkenden Steuermotor (14) antreibt, **dadurch gekennzeichnet, dass** das von dem Hydraulikölmotor (13) über das Umschaltventil (22) abströmende Hydrauliköl eine Druckerhöhung erfährt und über ein Regelventil (19) und ein Mischventil (17) vor den Hydraulikölmotor (13) rückgeführt wird.

5. Verfahren nach den Ansprüchen 1 und 2, **dadurch gekennzeichnet, dass** durch ein Blockieren der des ersten Hohlrads (4) durch die Hydraulikpumpe (12) und des zweiten Hohlrads (31) durch den Steuermotor (14) ein mechanischer Durchtrieb vom Fahrzeugmotor zur Kardanwelle erfolgt.

6. Vorrichtung bzw. Antriebssystem (1) einer mobilen Arbeitsmaschine einem fahrzeugseitigen Antriebsmotor, umfassend ein zweistufiges Planetengetriebe (10) mit zwei getrennten, verbindbaren Achswelle (3,6); wobei eine erste Achswelle (3) mit dem Fahrantriebsmotor und eine zweite Achswelle (6) mit einer Kardanwelle verbunden ist, sowie einem Zahnrad (8), das an die Außenverzahnung eines ersten Hohlrads (4) angeschlossen ist, und einem Zahnrad (9), das an die Außenverzahnung eines zweiten Hohlrads (31) angeschlossen ist, sowie mit einem Planetenträger (5), der auf jeder Seite Planetenräder (21, 33) trägt, wobei die Planetenräder (21) der ersten Seite Bestandteil der ersten Getriebestufe und die Planetenräder (33) der zweiten Seite Bestandteil der zweiten Getriebestufe sind, **dadurch gekennzeichnet, dass**
- die Achswelle (3) über das Sonnenrad (11) und den Planetenrädern (21) der ersten Getriebestufe mit dem ersten Hohlrad (4) verbunden ist, und Nebenaggregate (20) der Arbeitsmaschine über das erste Hohlrad (4) und das Zahnrad (8) durch eine Hydraulikpumpe (12) und einen Hydraulikmotor (13) angetrieben werden, wobei die Leistungszufuhr zu den Nebenaggregaten (20) durch ein Steuer- und Regelungsbauteil (16) regelbar ist,
- das an der Hydraulikölpumpe (12) durch den Antrieb der Nebenaggregate (20) entstehende Drehmoment ein Drehmoment an der Achswelle (6) zum Fahrantrieb auftritt,
- der Fahrantrieb der Arbeitsmaschine über die zweite Achswelle (6), die über ein zweites Sonnenrad (32) und den Planetenrädern (33) der zweiten Getriebestufe mit einem zweiten Hohlrad (31) verbunden ist, erfolgt, wobei durch einen Steuermotor (14) über das Zahnrad (9) zusätzlich Antriebsenergie zur Fahrgeschwindigkeitserhöhung eingespeist oder Bremsenergie zum zusätzlichen oder alleinigen Antrieb der Nebenaggregate (20) entnommen werden kann,
- durch eine Verstellung der Fahrzeugmotordrehzahl die Leistungszufuhr zum Planetengetriebe (10) durch eine Veränderung von Drehzahl und Drehmoment der Achswelle (3) regelbar und
- durch den Steuermotor (14) über das Zahnrad (9) eine Drehrichtungsumkehr des zweiten Hohlrads (31) und damit des zweiten Sonnenrads (32) einstellbar ist, so dass durch eine Überlagerung der gegenläufigen Drehbewegungen der beiden Sonnenräder (11,32) eine Fahrtrichtungsumkehr einstellbar ist.
